# EUROPEAN PATENT SPECIFICATION

(11) **EP 1 571 856 B1**
(45) Date of publication and mention of the grant of the patent: **13.03.2013**
(21) Application number: 03775987.5
(22) Date of filing: 01.12.2003
(51) Int. Cl.: H04W 68/00

(54) **RADIO CONTROL DEVICE, RADIO COMMUNICATION SYSTEM USING THE SAME, AND OPERATION CONTROL METHOD THEREOF**
FERNSTEUERUNGSEINRICHTUNG, FUNKKOMMUNIKATIONSSYSTEM MIT VERWENDUNG DERSELBEN UND BETRIEBSSTEUERUNGSSYSTEM DAVON
DISPOSITIF DE COMMANDE RADIO, SYSTEME DE COMMUNICATION RADIO FAISANT INTERVENIR CE DISPOSITIF, ET PROCEDE DE COMMANDE CORRESPONDANT

(30) Priority: 12.12.2002 JP 2002360072
(43) Date of publication of application: 07.09.2005
(73) Proprietor: NEC Corporation, Minato-ku Tokyo 108-8001 (JP)
(72) Inventor: NOMA, Satoshi, c/o NEC Corporation, Tokyo 108-8001 (JP)
(74) Representative: Stork Bamberger
(86) International application number: PCT/JP2003/015352
(87) International publication number: WO 2004/054292

(56) References cited:
- WO-A1-00/52948
- WO-A1-01/13657
- WO-A2-02/05538
- DE-A1- 10 105 093
- KEMPF J ET AL: "OPENRAN: A NEW ARCHITECTURE FOR MOBILE WIRELESS INTERNET RADIO ACCESS NETWORKS" IEEE COMMUNICATIONS MAGAZINE, IEEE SERVICE CENTER, PISCATAWAY, US LNKD- DOI:10.1109/35.1000222, vol. 40, no. 5, 1 May 2002 (2002-05-01), pages 118-123, XP001129447 ISSN: 0163-6804

## Description

### Background of Invention

The present invention relates to a radio control device according to the preamble of claim 1, a radio communication system according to the preamble of claim 8 , an operation control method according to the preamble of claim 14 and, more particularly, to a radio control device (RNC: Radio Network Controller) in a W-CDMA cellular type radio communication system.

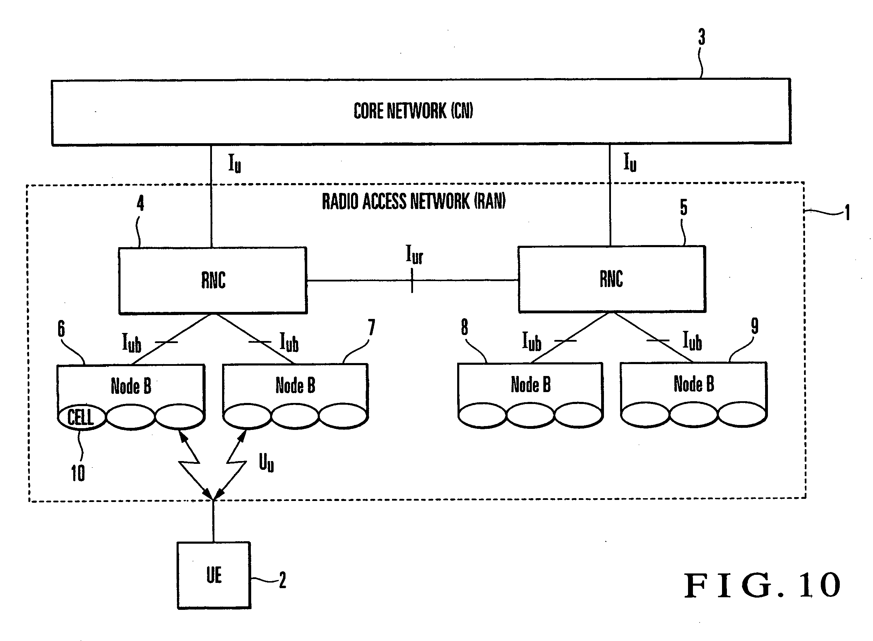

Fig. 10 shows the architecture of a W-CDMA communication system as a mobile communication system. A radio access network (RAN) 1 includes radio control devices (RNCs) 4 and 5 and Nodes B 6 to 9, and is connected to a core network (CN) 3 as an exchange network via an Iu interface. The Nodes B 6 to 9 mean logical nodes which perform radio transmission and reception, and are more specifically radio base stations.

Interfaces between Nodes B and the RNCs are called Iubs, and an Iur interface is also defined as an interface between the RNCs. Each Node B forms a radio area 10 including one or a plurality of cells, and is connected to a mobile device (UE) 2 via a radio interface Uu. The Nodes B terminate radio channels, and the RNCs manage Nodes B and select and synthesize radio paths upon software handover. Details of the architecture shown in Fig. 10 are defined in 3GPP (3rd Generation Partnership Projects) and specified in "W-CDMA Mobile Communication Method" (published in 2001 by Maruzen, edited by Keiji Tachikawa, pp. 96 - 106).

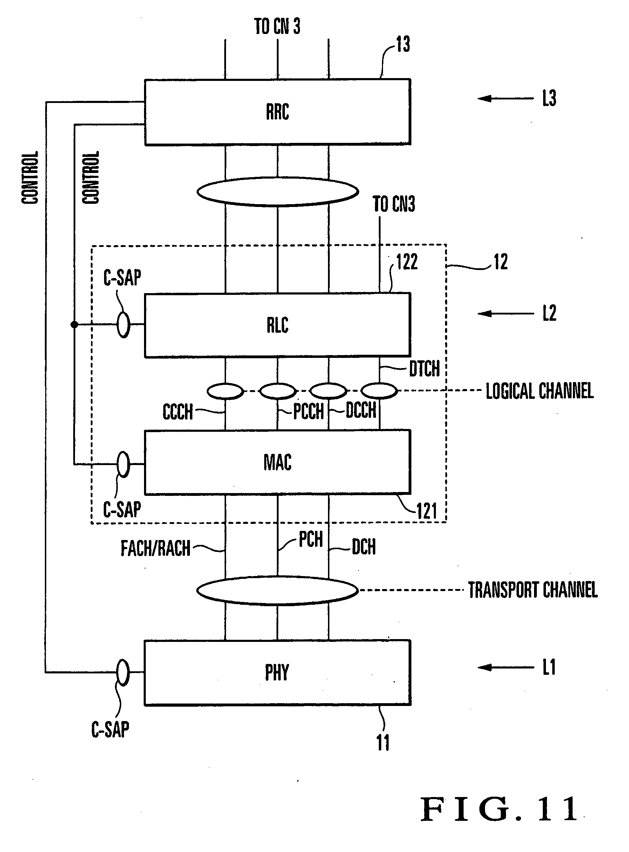

Fig. 11 shows the protocol architecture of the radio interface in the W-CDMA communication system shown in Fig. 10. As shown in Fig. 11, this protocol architecture is made up of three protocol layers, i.e., a physical layer (PHY) 11 indicated by L1, a data link layer 12 indicated by L2, and a network layer (RRC: Radio Resource Control) 13 positioned above the data link layer 12 and indicated by L3. The data link layer L2 includes two sublayers, i.e., MAC (Media Access Control) 121 and RLC (Radio Link Control) 122.

Ellipses in Fig. 11 indicate service access points (SAPs) between the layers or sublayers, and SAPs between the RLC 122 and MAC 121 provide logical channels. That is, the logical channels are channels provided from the MAC 121 to the RLC 122, classified in accordance with the functions or logical characteristics of transmission signals, and characterized by the contents of information to be transferred. Examples of this logical channel are a CCCH (Common Control Channel) and PCCH (Paging Control Channel) as common channels, and a DCCH (Dedicated Control Channel) and DTCH (Dedicated Traffic Channel) as dedicated channels.

An SAP between the MAC 121 and physical layer 11 provides a transport channel. That is, the transport channel is a channel provided from the physical layer 11 to the MAC 121, classified in accordance with the form of transmission, and characterized in accordance with what information is transferred by what method via the radio interface. Examples of this transport channel are an FACH (Forward Access Channel), RACH (Random Access Channel), PCH (Paging Channel), and DCH (Dedicated Channel).

The physical layer 11 and data link layer 12 are controlled by the network layer (RRC) 13 via a C-SAP which provides a control channel. Details of this protocol architecture shown in Fig. 11 are defined in ARIBSTD-T36-25. 301v. 3. 8.

The article "OpenRAN: A New Architecture for Mobile Wireless Internet Radio Access Networks" by James Kempf et al, IEEE Communications Magazine, US LNKD-DOI:10.1109/35.1000222, vol. 40, no. 5, 1 May 2002, discloses a network architecture having a radio access network which is partitioned into atomic functions. The partitioned atomic functions are grouped into functional entities, namely control and bearer planes, respectively. The control plane functional entities are involved in controlling the radio link protocol between mobile terminals and the radio base transceiver stations.

In a general communication system, a communication protocol and its protocol message transfer function are called a control plane (C-Plane), and a user data transfer function is called a user plane (U-Plane).

In the conventional RNC, the C-Plane (mainly the RRC) and the U-Plane (mainly the RLC and MAC) form a physically integrated device. The conventional RNC in which the C-Plane and U-Plane are thus integrated has the following problems.

First, it is difficult to improve the processing capability of the C-plane, when necessary, without any influence on the U-Plane. Second, it is difficult to improve the processing capability of the U-Plane, when necessary, without any influence on the C-Plane. Third, when an overload is applied on the C-Plane, the U-Plane may also be influenced by the overload. Fourth, when an overload is applied on the U-Plane, the C-Plane may also be influenced by the overload.

To solve these problems, C-U separation (separation between the C-plane and U-Plane) by the RNC is possible. The following merits may be obtained by this method. That is, the expandability improves because the C-plane and U-plane can develop independently of each other, and the flexibility improves because different loads on the C-plane and U-plane can be flexibly controlled.

To perform C-U separation by the RNC, the device is not simply divided, but it is necessary to exert no influence on the existing interfaces (e.g., Iub, Iu, and Uu). It is also necessary to perform optimum separation which minimizes the signal amount between C and U.

A paging signal in the WCDMA system is transmitted to a specific UE by the RNC. Paging signal processing is activated by a trigger which is the reception of a report, from the CN to the RNC, indicating that user data addressed to a specific UE has arrived (or an incoming call has arrived). The paging signal includes a paging message. The paging signal has an attached signal, and the UE receives this attached signal and determines whether to receive the paging signal. A paging identifier PI (Paging Indication) is carried on the attached signal. The paging identifier PI corresponds to a plurality of UEs (IMSI: International Mobile Subscriber Identify).

More specifically, in a radio channel between the Node B and UE, the paging signal is mapped in an S-CCPCH (Secondary-Common Control Channel) which is a downstream common channel. A signal attached to this signal is a PICH (Paging Indication Channel) which is a signal for transmitting the presence/absence of incoming call information with respect to each paging group (called party group). When a UE which belongs to a certain paging group #n is notified by this PICH that an incoming call to the paging group #n has arrived, this UE receives a PCH (Paging Channel) in a corresponding radio frame mapped in the S-CCPCH.

The UE having received this PCH paging signal checks whether the paging message contains the terminal number of the UE, and, if the terminal number of the UE is contained, recognizes that user data addressed to the UE has arrived (or an incoming call has arrived). Identifiers of a plurality of UEs (IMSI) can be carried on the paging message. Therefore, even when a plurality of CNs simultaneously report the reception of incoming calls, these reports can be multiplexed in one paging message. The whole paging message signal amount can be reduced by this multiplexing.

The RNC must create a paging message containing an appropriate terminal number. The paging message is transmitted at a certain specific timing. If the UE knows this timing, it need not always wait for a paging signal, so the power can be saved. A state in which the UE is thus waiting for a paging signal is called a standby state. The UE receives a paging signal in this standby state. If the number of times of repetitive transmission of a paging signal is increased, the probability that the UE receives the paging signal increases. However, downstream radio resources are wasted.

The RNC calculates the transmission timing of a paging signal to a certain UE, and notifies Node B of the calculation result. The contents notified to Node B are information necessary to generate a signal (PICH) to be attached to the paging signal, and the transmission timing of the paging signal. The RNC must designate the timing at which Node B transmits the paging signal (the signal attached to the paging signal). Also, the RNC must transmit a necessary signal to Node B before this transmission timing. In addition, the RNC must determine a paging identifier PI as the information necessary to generate the signal to be attached to the paging signal.

When the UE is in the standby state, the RNC does not know the accurate position of the terminal. Accordingly, the paging signal is transmitted to a certain wide area. This area is called a paging area. If the paging area is widened, the probability that the UE receives the paging signal increases. However, downstream radio resources are wasted. The RNC must select an appropriate paging area, and instruct Nodes B included in the area to transmit paging signals.

When C-U separation which is separation between the C-plane and U-Plane is to be performed in the RNC which implements the paging system as described above, it is necessary to determine how to transmit a paging signal from the C-plane to a terminal. As described above, the necessary conditions of this C-U separation are that the existing interfaces (e.g., Iub, Iu, and Uu) are not affected and the signal amount between C and U is minimized.

### Summary of Invention

The present invention has been made to solve the above problems, and has as its object to provide a radio control device, a mobile communication system using the same, and an operation control method thereof, by which C-U separation is possible, and the C-plane and U-plane can develop and expand independently of each other.

A radio control device according to the present invention is a radio control device with the features of the characterising portion of claim 1.

A radio communication system according to the present invention is a radio communication system with the features of the characterising portion of claim 8.

An operation control method of a radio control device according to the present invention is an operation control with the features of the characterizing portion of claim 14.

### Brief Description of Drawings

- Fig. 1: is a system block diagram including a radio control device (RNC) to which an embodiment of the present invention is applied;
- Fig. 2: is a functional block diagram of a CPS shown in Fig. 1;
- Fig. 3: is a functional block diagram of a UPS shown in Fig. 1;
- Fig. 4: is a sequence diagram showing the overall operation of the embodiment of the present invention;
- Fig. 5: is an operation flowchart of a paging area deciding unit;
- Fig. 6: is a view showing an example of a paging group decision table;
- Fig. 7: is an operation flowchart of a paging message creating unit;
- Fig. 8: is a view showing an example of a paging area conversion table;
- Fig. 9: is an operation flowchart of a paging radio channel setting information deciding unit;
- Fig. 10: is a view showing the system architecture of a W-CDMA mobile communication system; and
- Fig. 11: is a view showing a protocol architecture in a RAN shown in Fig. 10

### Detailed Description of Embodiment

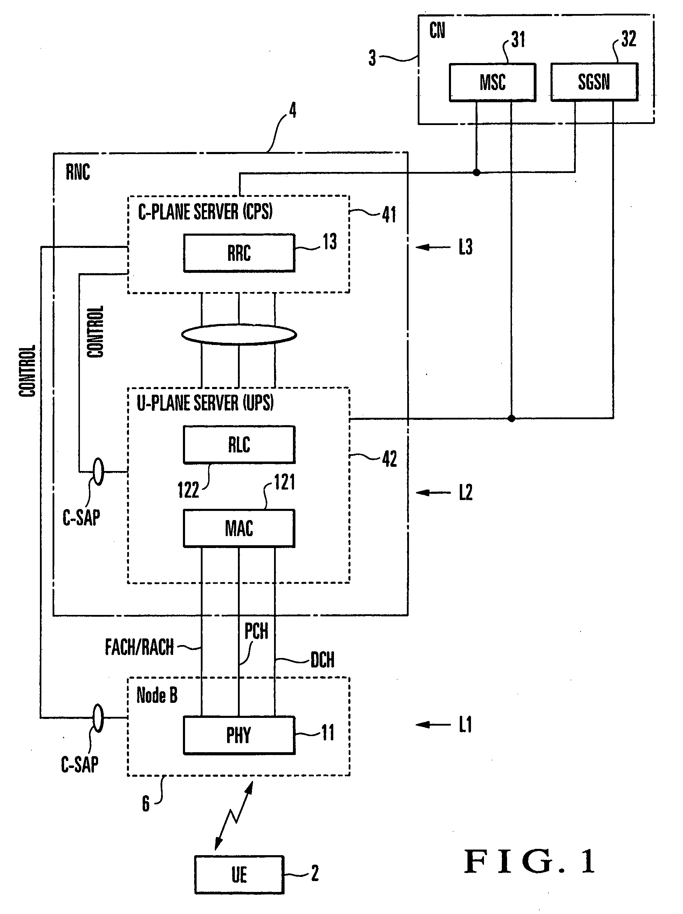

An embodiment of the present invention will be described in detail below with reference to the accompanying drawings. Fig. 1 is a functional block diagram of a C-U separating structure of an RNC to which the embodiment of the present invention is applied, and the same reference numerals as in Fig. 11 denote the same constituent elements in Fig. 1. As shown in Fig. 1, an RNC 4 is separated into a C-plane server (CPS: Control Plane Server) 41 equivalent to a control plane control means in charge of C-plane which controls transfer of signaling, and a U-plane server (UPS: User Plane Server) equivalent to a user plane control means in charge of U-plane which controls transfer of user data.

The CPS 41 has a function of generating and terminating an RRC message in an RRC 13 positioned as an upper layer of the UPS 42, and the UPS 42 has functions provided by a MAC 121 and RLC 122. RRC signaling between a mobile device (UE) 2 and the RNC 4 is performed by using the function provided by the MAC 121 or the function provided by the RLC 122 in the UPS 42, and then transferred to the RRC 13 in the CPS 41.

In the protocol architecture of the existing RNC shown in Fig. 11, the above arrangement allows a physical layer (PHY) 11 indicated by L1 to separate into a Node B (radio base station) 6, a data link layer 12 indicated by L2 to separate into the USP 42, and a network layer 13 indicated by L3 to separate into the CPS 41. Note that in Fig. 1, the connection between the MAC 121 and RLC 122 is omitted because this connection is equivalent to that shown in Fig. 11.

The RRC 13 in the CPS 41 controls the physical layer 11 in Node B and the MAC 121 and RLC 122 in the UPS 42 by using C-SAPs (Control Service Access Points) which provide control channels. Also, the CPS 41 terminates and processes signaling between the RNC 4 and an MSC (Mobile Switching Center) 31 or GSN (Serving GPRS (Global Packet Radio Service) Switching Node) 32.

The MSC 31 has a channel switching function, the SGSN 32 has a packet switching function, each of which is included in a core network (CN) 3 shown in Fig. 10. User data is exchanged between the mobile device (UE) 2 and the MSC 31 or SGSN 32 via the UPS 42 and Node B.

A system configuration having high scalability can be obtained by using the device arrangement shown in Fig. 1 as described above. That is, it is possible to add only the CPS 41 in order to improve the signaling performance, and add only the UPS 42 in order to increase the user data transfer rate. Also, since the individual functions in the UPS 42 are not related between the respective corresponding devices but controlled by the RRC 13 in the CPS 41, these functions may also be implemented as independent devices.

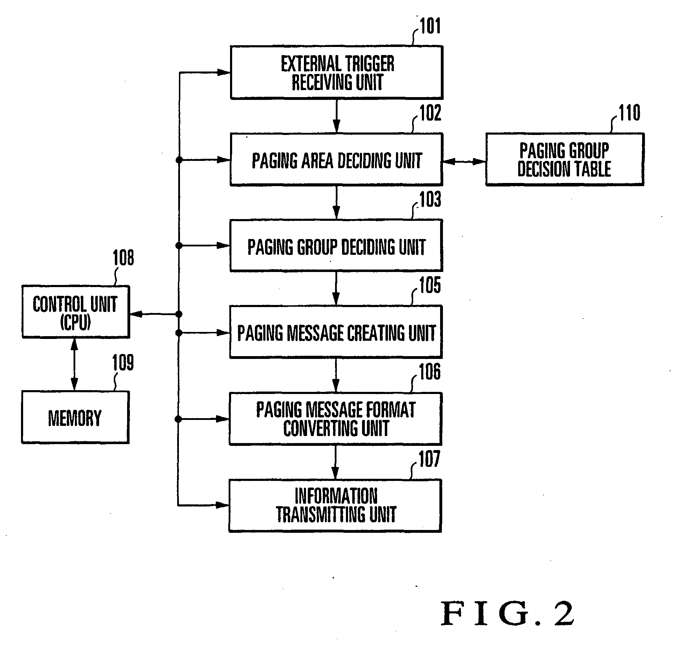

Fig. 2 is a functional block diagram according to the paging process of the CPS 41 shown in Fig. 1, and has six functions described below. An external trigger receiving unit 101 is a functional part which receives an external message for activating an operation of determining information necessary for paging. A paging area deciding unit 102 determines a paging message transmission area on the basis of information related to a paging area if this information is contained in an external message, and determines a predetermined area as a paging message transmission area if the information is not contained.

A paging group deciding unit 103 determines the paging group on the basis of the terminal number (IMSI) of a called party contained in the external message. The paging group indicates a group (called party group) of terminals which intermittently receive a specific paging message, and is determined by looking up a paging group decision table 110 on the basis of the terminal number of a called party contained in the external message.

A paging message creating unit 105 has a function of creating a paging message. Paging message means information to be transmitted to a terminal by using a paging radio channel (S-CCPCH). A terminal which intermittently receives the paging message checks by this message whether an incoming call has arrived.

A paging message format converting unit 106 performs processes such as padding, division, and concatenation in order to give the paging message a bit size suited to a corresponding radio channel. Consequently, the paging message is processed into a data length suited to be transferred to the PHY layer L1 (Fig. 1).

An information transmitting unit 107 transfers information necessary for paging to the UPS 42. The necessary information contains, e.g., the paging area, paging group, and paging message described above.

A control unit 108 is a CPU (computer), and controls the operations of the units 101 to 107 by reading out programs stored in a memory 109 and following the sequences of the readout programs. The memory 109 includes a working RAM of the CPU 108, in addition to a ROM which stores the programs.

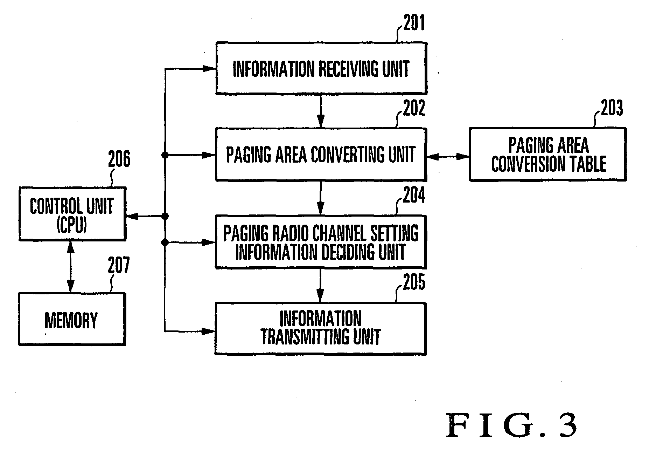

Fig. 3 is a functional block diagram according to the paging process of the UPS 42 shown in Fig. 1, and has five functions described below. An information receiving unit 201 has the function of receiving information necessary for paging received from the CPS 41, and receives the paging area, paging group, and paging message.

A paging area converting unit 202 converts the paging area into a physical area, i.e., specifies a specific radio base station (or stations) from the paging area which designates a logical area, and designates a specific cell which belongs to this radio base station. This conversion is done by using a paging area conversion table 203.

A paging radio channel setting information deciding unit 204 determines, from the paging group, a CFN (Connection Frame Number) which is paging radio channel setting information, and a paging identifier PI. In the WCDMA system as described above, a terminal which performs intermittent reception first receives a channel PICH attached to an S-CCPCH as a radio channel which carries a paging message. As described previously, the attached channel PICH contains a paging identifier PI corresponding to a paging group (called party group) number to which terminals belong, and a terminal which belongs to this group receives a PCH in a corresponding radio frame mapped in a radio channel S-CCPCH which carries a paging message next.

In Node B, therefore, a radio channel (S-CCPCH) for carrying the paging message and a channel (PICH) attached to this radio channel are generated. The CFN and PI (paging radio channel setting information) are necessary to set these paging radio channels, and the paging radio channel setting information deciding unit 204 determines the CFN and PI.

The paging radio channel setting information deciding unit 204 also determines a radio frame number for transmitting a paging message, on the basis of the present radio frame number. This makes it possible to minimize the time from the generation of an external trigger to the reception of a paging message by a terminal.

An information transmitting unit 205 transmits information necessary to transmit a paging message to Node B, i.e., transmits the information to Node B at a timing earlier than the radio frame number for paging message transmission determined by the paging radio channel setting information deciding unit 204.

A controller 206 is a CPU (computer), and controls the operations of the units 201 to 205 by reading out programs stored in a memory 207 and following the sequences of the readout programs. The memory 207 includes a working RAM of the CPU 206, in addition to a ROM which stores the programs.

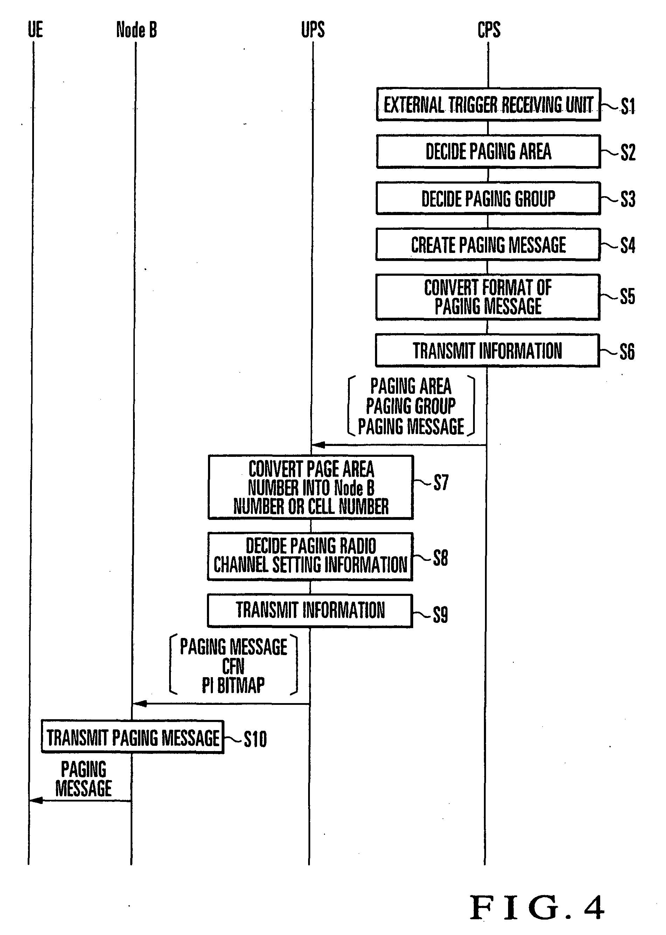

The operation of the embodiment of the present invention will be explained below. Fig. 4 is a sequence diagram showing an outline of the flow of the operation of this embodiment. Step S 1 indicates the reception of an external trigger, and this step is processed by the external trigger receiving unit 101 shown in Fig. 2. In the WCDMA system, for example, "external" is equivalent to a signal which notifies an incoming call from the MSC 31/SGSN 32 of the CN 3 (Fig. 1), and a paging message of an RANAP (Radio Access Network Application Part) protocol is an example. This signal sometimes contains a paging area in addition to a terminal identifier.

Connecting to the Internet is also possible, and in this case INVITE reception of an SIP (Session Initiation Protocol) used in an IP network is included. In this case, user data is directly sent from the Internet, so the user data itself is an external trigger. An example of this user data is data to which an IPv6 (Internet Protocol version 6) header is attached, and this header has an IPv6 address of a terminal as a destination address.

Step S2 indicates the decision of a paging area, and shows the processing of the paging area deciding unit 102 shown in Fig. 2. If in step S1 information pertaining to a paging area is contained, a decision is made on the basis of this information. If this information is not contained, a predetermined paging area is selected.

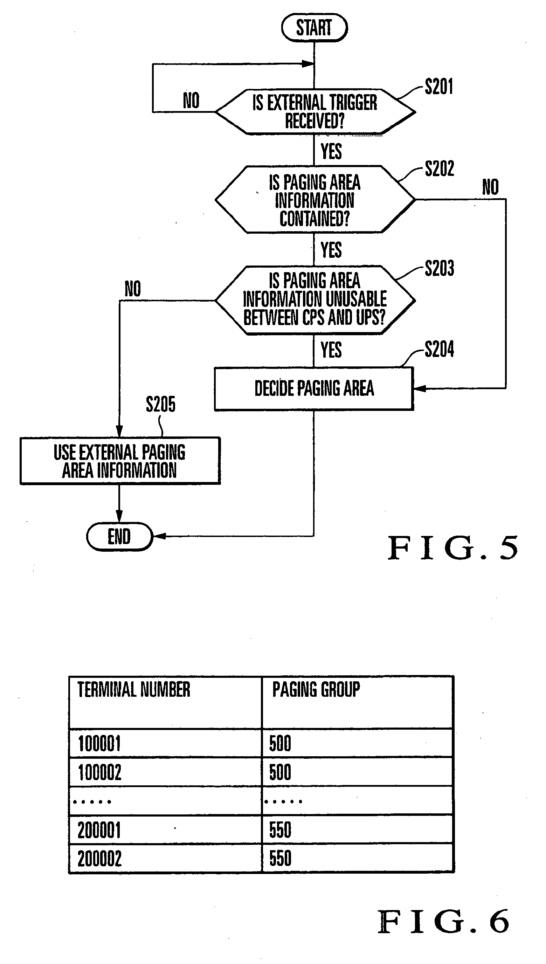

Fig. 5 shows the details of paging area decision step S2. If an external trigger is received (step S201), whether paging area information is contained is checked (step S202), and a predetermined paging area is set if no such information is contained (step S204). On the other hand, if in step S202 the paging area information is contained, whether the paging area information is usable between the CPS and UPS is checked (step S203), and, if the paging area information is usable, e.g., if the information is paging area information contained in the RANAP paging message, this information is directly used as paging area information later (step S205). If the paging area information is found to be unusable in step S203, the processing in step S204 is performed.

Step S3 is the decision of a paging group, and the processing is performed by the paging group deciding unit 103. As described above, the signal received in step S 1 contains terminal numbers of called parties. On the basis of the terminal numbers, a paging group (called party group) is specified. For example, this step is implemented by installing the paging group decision table 110 (Fig. 2) as shown in Fig. 6 in the CPS. Note that for an IP packet, a terminal number is determined by looking up a prepared conversion table by using a destination address as a key. Instead of preparing this conversion table, it is also possible to refer to an external server having information of correspondence between IPv6 addresses and terminal numbers. A paging group can be determined from the determined terminal numbers by using the paging group decision table 110.

Step S4 is the creation of a paging message, which is the processing of the paging message creating unit 105. In the 3GPP standard, this paging message is equivalent to a paging type 1 message based on the RRC protocol, and a terminal identifier (terminal number) can be carried on this message. Also, unlike the RANAP paging message described above, a plurality of terminal identifiers can be carried on one paging type 1 message. If a plurality of CNs notify call reception, terminal identifiers corresponding to these notifications of call reception can be superposed.

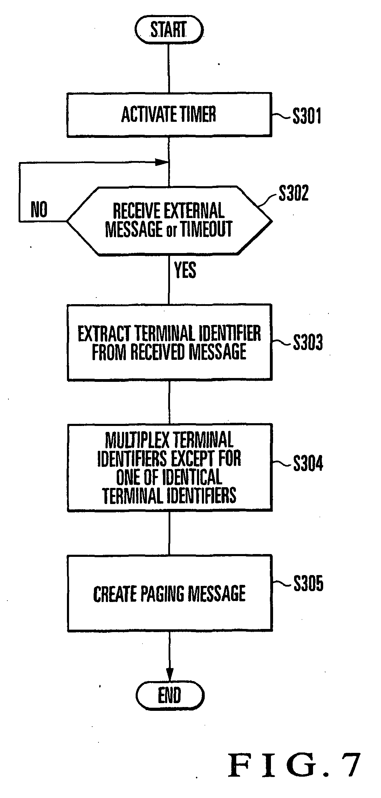

Fig. 7 is a flowchart showing details of this paging message creation process. A timer is activated to wait for an external message for a certain predetermined time (step S301). A terminal identifier is extracted from a message externally sent during this time (steps S302 and S303). Note that for an IPv6 packet from the Internet, the terminal number (terminal identifier) obtained in the paging group decision process (step S3) is used.

On the basis of the terminal identifier thus obtained, an RRC paging type 1 message is created. If a plurality of external messages are received, multiplexing is performed as described above, but, if some of the plurality of messages correspond to the same terminal identifier, a message is created by multiplexing only one of these identical terminal identifiers with other terminal identifiers (steps S304 and S305).

Step S5 is the format conversion of the paging message, which is the processing by the paging message formation converting unit 106. In the 3GPP standard, a paging type 1 message based on the RRC is processed in a so-called transparent manner in the RLC and MAC. Accordingly, the paging type 1 message itself does not undergo any format conversion in the UPS. However, when the message is transferred to the PHY via the RLC and MAC, the data length must always be constant. Since the UPS does not process data containing an RRC paging type 1 message received from the CPS, the CPS must obtain the necessary data length to be transferred to the PHY.

If, therefore, the bit length of the paging message is inappropriate for a paging radio channel, the CPS performs processes such as padding, division, and concatenation in order to obtain an appropriate length.

Step S6 is the transmission of the message from the CPS to the UPS, which is the operation of the information transmitting unit 107. The paging area, paging group, and paging message determined and created in steps S2 to S5 described above are transmitted from the CPS to the UPS.

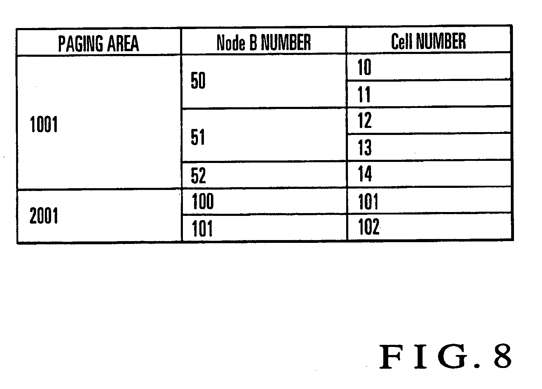

The foregoing are processes (functions) executed by the CPS, and processes (functions) executed by the UPS will be explained below. The paging area, paging group, and paging message from the CPS are received by the information receiving unit 201 (Fig. 3) of the UPS, and in step S7 the paging area is converted into a Node B number or cell number. This conversion process is performed by the paging area converting unit 202 shown in Fig. 3. A physical area for paging message transmission is specified on the basis of the paging area, and the conversion process is performed using the paging area conversion table 203 (Fig. 3) as shown in Fig. 8. For example, when the paging area is 1001, the paging message is transmitted to Nodes B having Node B Nos. 50 to 52, or to cells having cell Nos. 10 to 14.

Step S8 is a paging radio channel setting information decision process using the paging group, which is the function of the paging radio channel setting information deciding unit 204 shown in Fig. 3. More specifically, the paging group is converted into information of a paging message transmission timing and intermittent reception timing, i.e., the logical paging group is converted into parameters related to a radio channel. For example, the WCDMA system uses parameters such as a radio frame number (CFN: Connection Frame Number) by which the paging message is to be transmitted, and a group number (paging identifier: PI) of a terminal to be carried on a channel (PICH) attached to a radio channel (S-CCPCH) which carries the paging message.

The radio frame number CFN for transmitting the paging message is determined on the basis of the present radio frame number obtained by synchronizing the UPS and Node B. This makes it possible to shorten the time from the reception of the external trigger by the CPS to the reception of the paging message by the terminal.

As already described previously, the RRC paging type 1 is mapped in the S-CCPCH as a radio channel by the PHY layer L1 (11). Also, the PICH as an attached channel carries the paging identifier PI which is the group number of a terminal, and each terminal in a standby state checks this PICH at a certain period. This period is called an intermittent reception timing. If a terminal detects that a paging message addressed to it has arrived, the terminal receives the corresponding intra-radio-frame PCH which is mapped in the S-CCPCH and transmitted when a predetermined time has elapsed from the PICH. Accordingly, the intermittent reception time of the terminal must be adjusted to match the transmission time of the S-CCPCH and PICH. It is also necessary to prepare information required to create the PICH.

The UPS and Node B are connected by the Iub interface, and data must be exchanged in a format called a Frame Protocol (FP) between them. The format of this FP is defined for each channel type, and the format of a paging channel contains a transmission timing (CFN), a PI bitmap as information necessary to generate the PICH, and a paging message (RRC: paging type 1) having a necessary data length to be transferred to the PHY layer.

The UPS creates the transmission timing and the information necessary to generate the PICH, and the paging group transferred from the CPS is the basis of these pieces of information to be created. In the 3GPP, parameters such as a terminal identifier IMSI, an intermittent reception timing, a present CFN obtained by synchronizing the UPS and Node B, and the number of S-CCPCHs for transmitting the paging message are defined as the transmission timing and the information required to generate the PICH. A calculation method of deducing the CFN and PI bitmap from these parameters is defined in the 3GPP, and disclosed in "3GPP TS25. 304v3. 7. 0 (Release 99)", page 29.

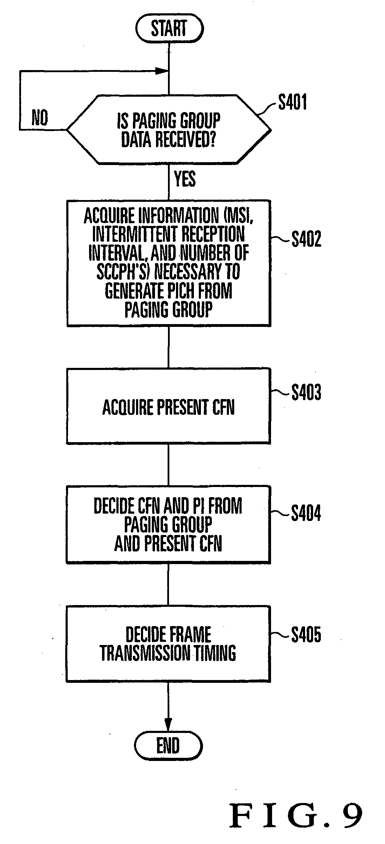

Fig. 9 is a flowchart showing details of this paging radio channel setting information decision process. First, when data of the paging group is received (step S401), parameters such as the IMSI, the intermittent reception interval, and the number of S-CCPCHs as information necessary to generate the PICH are obtained from this paging group (step S402). The UPS can acquire these parameters because it has a table indicating the relationship between the paging group and these parameters.

Then, a present CFN is obtained (step S403). A CFN and PI bitmap are determined from the parameters such as the IMSI and intermittent reception interval and the present CFN. This decision method is also the method defined in the reference of the 3GPP described above. The transmission timing of the paging radio channel setting information thus obtained is determined on the basis of the present CFN, so that the information is transmitted earlier to Node B (step S405). That is, the information is transmitted to a radio base station at a timing earlier than the radio frame number CFN for transmitting the paging message determined in step S8.

In step S 10, the paging message is transmitted from the radio base station to the terminal by using the paging radio channels (S-CCPCH and PICH).

The functions of this embodiment will be described in detail below. The functions of the RNC for the paging process include a paging message creating function, a function of determining a timing (radio frame number) at which a paging signal is transmitted from Node B, a paging identifier determining function of generating a signal to be attached to the paging signal in Node B, and a paging area determining function.

The control plane control means is in charge of the paging message creating function because the paging message is equivalent to a control signal.

When the function of determining a timing (radio frame number) at which a paging signal is transmitted from Node B is to be performed by the control plane control means, the control plane control means and Node B must be synchronized with each other. Also, since the paging message itself is transferred via the control plane control means → the user plane control means → Node B, the user plane control means and Node B must be synchronized with each other. Accordingly, Node B must be synchronized with both the control plane control means and user plane control means. This means that the signal amount for synchronization is increased by C-U separation. If the user plane control means determines the transmission timing, therefore, Node B need only be synchronized with the user plane control means, but a means for transmitting information for determining the transmission timing from the control plane control means to the user plane control means is necessary.

When the paging identifier determining function of generating a signal to be attached to the paging signal in Node B is to be performed by the control plane control means, the paging identifier PI must be transmitted to the user plane control means in addition to the paging message. Since, however, the paging message and paging identifier PI are pieces of information in different layers (the paging message is in the RRC, and the paging identifier PI is in the PHY), it is illogical to process these pieces of information in the same manner. Although this problem can be prevented if the paging identifier is determined by the user plane control means, a means for transmitting information for determining the paging identifier from the control plane control means to the user plane control means is necessary.

When the paging area determining function is to be performed by the user plane control means, if a plurality of user plane control means manage the same Node B, these user plane control means must be so adjusted that no paging signal transmission occurs a plurality of number of times, and this adjustment increases the signal amount between the user plane control means. When the decision is to be made by the control plane control means, setting can be performed such that different Nodes B do not transmit paging signals to the same user plane control means.

From the foregoing, the following two problems must be solved. The first problem is which node is to calculate the paging timing, and the second problem is which node is to determine the paging area.

The first problem is which of the control plane control means and user plane control means is to perform the function of calculating the paging transmission timing. This function can be further divided into the following functions: a function of determining a radio frame number for starting paging signal transmission, and a function of transmitting a paging signal to Node B at a timing much earlier than the determined radio frame number. To realize this function, the present radio frame number must be known. Also, a function of determining information for creating a signal (PICH) attached to a paging signal (S-CCPCH) in Node B is necessary. The paging identifier PI is carried on this attached signal. The paging identifier PI corresponds to a plurality of UEs (IMSI). Accordingly, it is necessary to determine a paging identifier PI to which the UE (IMSI) of the paging signal transmission destination corresponds.

The second problem is which of the control plane control means and user plane control means is to perform the function of determining an appropriate paging area. If a plurality of user plane control means manage the same Node B, these user plane control means must be so adjusted that no paging signal transmission occurs a plurality of number of times. To solve these problems, the control plane control means and user plane control means must have the following functions.

Six functions necessary for paging are installed in the control plane control means. That is,
(1) a function of receiving an external message which activates an operation of determining information necessary for paging. The external message contains information indicating that an incoming call has arrived at a specific terminal. Alternatively, the external message is user data itself to a specific terminal.
(2) A function of determining a paging area (the solution of the second problem). The paging area is an area in which paging messages having the same contents are transmitted. If the external message contains information related to the paging area, the paging area is determined on the basis of this information.
(3) A function of determining a paging group (the solution of the first problem). The paging group is a group of terminals which intermittently receive a specific paging message. The paging group is determined on the basis of a called party terminal number contained in the external message.
(4) A paging message creating function. The paging message is information transmitted to a terminal by using a paging radio channel (S-CCPCH). A terminal which performs intermittent reception checks whether there is an incoming call by checking this message.
(5) A function of converting the format of the paging message. Padding, division, and concatenation are performed to convert the paging message into a bit size suited to the corresponding radio channel. This function is effective if the user plane control means does not have it.
(6) A function of transferring the information necessary for paging to the user plane control means. This necessary information contains the paging area, paging group, and paging message described above.

Functions necessary for paging installed in the user plane control means are the following five functions.
(1) A function of receiving the information necessary for paging received from the control plane control means. This function receives the paging area, paging group, and paging message described above.
(2) A function of converting the paging area into a physical area (the solution of the second problem). A specific radio base station (or stations) is specified from the paging area which designates a logical area, and a specific cell to which this radio base station belongs is designated.
(3) A function of converting the paging group into paging radio channel setting information (the solution of the first problem). This function converts a logical paging group into parameters related to a radio channel. In the WCDMA system, a terminal which performs intermittent reception first receives a channel PICH attached to an S-CCPCH as a radio channel which carries a paging message. As described previously, the attached channel PICH contains a paging identifier PI, and a terminal which belongs to this PI receives a radio channel S-CCPCH which carries a paging message next. Node B generates a radio channel which carries a paging message and a channel attached to this radio channel. This "paging radio channel setting information" is setting information pertaining to a radio channel which carries a paging message and a channel attached to this radio channel. The setting information contains, e.g., a radio frame number for transmitting a paging message, and a terminal's paging group number to be carried on an attached channel.
(4) A function of acquiring the present radio frame number (the solution of the first problem). This function is necessary to determine the "paging radio channel transmission timing" described above. This function is also necessary to determine the timing at which the user plane control means transmits information concerning a paging message to a radio base station. With this function, a paging message can be sent to a terminal with a minimum time difference after the reception of a trigger by the control plane control means.
(5) A function of transferring information necessary for paging to Node B. As described above, in the WCDMA system in which information is transferred to Node B on the basis of physical information converted from logical information, the following information is transmitted to Node B to which a specific cell belongs. That is, the information contains the transmission timing of a radio channel related to paging, information necessary to check whether a paging message addressed to a paging group to which a terminal which performs intermittent reception belongs is transmitted, and the paging message.

The above-mentioned first problem is solved by using the concept called a paging group between the control plane control means and user plane control means. The user plane control means derives the paging signal transmission timing and paging identifier PI from synchronization information between the paging group and Node B. This makes it unnecessary to process information in different layers in the same manner. Also, since radio parameters unique to the WCDMA are hidden by the concept called a paging group, the present invention is applicable to other mobile communication systems using paging.

The above-mentioned second problem is solved by determining a paging area by the control plane control means. This obviates the need for those signals between the user plane control means, which prevent identical paging signals from being transmitted by the same Node B.

As described above, the CPS in charge of the control plane determines, in response to an external trigger for activating a paging process, paging group information on the basis of terminal identification information contained in this external trigger, and transfers this paging group information to the UPS in charge of the user plane, and the UPS generates paging radio channel setting information on the basis of the paging group information, thereby achieving the following effects.

That is, the paging information transferred between the CPS and UPS is paging group information which is not radio-depending (i.e., which is independent of any radio scheme such as the WCDMA), and the UPS converts this information into radio-dependent information when performing paging. Therefore, the C-U separation of the RNC as a radio control device becomes possible, the C-plane and U-plane can develop without depending on each other, and the loads applied on the C-plane and U-plane can be flexibly controlled in situations different from each other.

## Claims

1. A radio control device (4) which comprises user plane control means (42) for controlling transfer of user data concerning a mobile terminal, and control plane control means (41) for controlling transfer of signaling as a control signal, and which is adapted to manage a radio base station (6), **characterized in that**
said control plane control means (41) comprises paging group deciding means (103) for determining, in response to an external trigger for activating a paging process, and on the basis of terminal identification information contained in the external trigger, paging group information indicating a called party group to which a mobile terminal specified by the terminal identification information belongs, and
said user plane control means (42) comprises radio channel setting information deciding means (204) for determining setting information for a paging radio channel generated by said radio base station (6), on the basis of the paging group information.

2. A radio control device (4) according to claim 1, **characterized in that** said control plane control means (41) and user plane control means (42) are physically separated from each other.

3. A radio control device (4) according to claim 1, **characterized in that** said paging group deciding means (103) is adapted to determine the paging group information by using a conversion table for the terminal identification information and paging group information.

4. A radio control device (4) according to claim 1, **characterized in that** said radio channel setting information deciding means (204) is adapted determine, as the setting information, transmission frame number information of the paging radio channel and paging identifier information corresponding to the paging group to be carried on the channel, on the basis of the paging group information and a present transmission frame number of a radio channel in said radio base station (6).

5. A radio control device (4) according to claim 1, **characterized in that** said control plane control means (41) further comprises means (105) for creating a paging message.

6. A radio control device (4) according to claim 5, **characterized in that** said control plane control means (41) further comprises means (102) for determining paging area information for specifying a radio base station (6) to which the paging message is to be transmitted.

7. A radio control device (4) according to claim 6, **characterized in that** said user plane control means (42) is adapted to transmit the paging message and setting information to said radio base station (6) in accordance with the paging area information.

8. A radio communication system comprising:
a radio base station (6) which terminates a mobile terminal (2) via a radio channel;
a radio control device (4) which comprises user plane control means (42) for controlling transfer of user data concerning said mobile terminal (2), and control plane control means (41) for controlling transfer of signaling as a control signal, and which is adapted to manage said radio base station (6); and
a core network (3) which is adapted manage said radio control device (4), **characterized in that**
said control plane control means (41) comprises paging group deciding means (103) for determining, in response to an external trigger for activating a paging process, and on the basis of terminal identification information contained in the external trigger, paging group information indicating a called party group to which a mobile terminal (2) specified by the terminal identification information belongs, and
said user plane control means (42) comprises radio channel setting information deciding means (204) for determining setting information for a paging radio channel generated by said radio base station (6), on the basis of the paging group information.

9. A radio communication system according to claim 8, **characterized in that** said control plane control means (41) and user plane control means (42) are physically separated from each other.

10. A radio communication system according to claim 9, **characterized in that** said control plane control means (41) further comprises means (105) for creating a paging message.

11. A radio communication system according to claim 10, **characterized in that** said control plane control means (41) further comprises means (102) for determining paging area information for specifying a radio base station (6) to which the paging message is to be transmitted.

12. A radio communication system according to claim 11, **characterized in that** said user plane control means (42) is adapted to transmit the paging message and setting information to said radio base station (6) in accordance with the paging area information.

13. A radio communication system according to claim 12, **characterized in that** said radio base station (6) is adapted to transmit the paging message to said mobile terminal (2) on the basis of the setting information.

14. An operation control method of a radio control device (4) which comprises a user plane control unit (42) for controlling transfer of user data concerning a mobile terminal (2), and a control plane control unit (41) for controlling transfer of signaling as a control signal, and which manages a radio base station (6), **characterized by** comprising the steps of:
determining, in the control plane control unit (41), paging group information indicating a called party group to which a mobile terminal (2) belongs, in response to an external trigger for activating a paging process, and on the basis of terminal identification information contained in the external trigger; and
determining, in the user plane control unit (42), setting information for a paging radio channel generated by the radio base station (6), on the basis of the paging group information.

15. An operation control method according to claim 14, **characterized in that** the control plane control unit (41) and user plane control unit (42) are physically separated from each other, and
the method further comprises the step of transmitting the paging group information from the control plane control unit (41) to the user plane control unit (42).

16. An operation control method according to claim 14, **characterized in that** the step of determining the paging group information comprises the step of determining the paging group information by using a conversion table for the terminal identification information and paging group information.

17. An operation control method according to claim 14, **characterized in that** the step of determining the radio channel setting information comprises the step of determining, as the setting information, transmission frame number information of the paging radio channel and paging identifier information corresponding to the paging group to be carried on the channel, on the basis of the paging group information and a present transmission frame number of a radio channel in the radio base station (6).

18. An operation control method according to claim 14, **characterized by** further comprising, in the control plane control unit (41), the step of creating a paging message.

19. An operation control method according to claim 18, **characterized by** further comprising, in the control plane control unit, the step of determining paging area information for specifying a radio base station (6) to which the paging message is to be transmitted.

20. An operation control method according to claim 19, **characterized by** further comprising, in the user plane control unit (42), the step of transmitting the paging message and setting information to the radio base station (6) in accordance with the paging area information.

## Patentansprüche

1. Fernsteuerungseinrichtung (4), die Benutzerebenensteuermittel (42) zum Steuern der Übertragung von Benutzerdaten, die einen Mobilanschluss betreffen, und Kontrollebenensteuermittel (41) zum Steuern der Übertragung einer Signalgabe als ein Steuersignal umfasst, und die eingerichtet ist, um eine Funkbasisstation (6) zu verwalten, **dadurch gekennzeichnet, dass**
das Kontrollebenensteuermittel (41) Funkrufgruppenentscheidungsmittel (103) zum Bestimmen von Funkrufgruppeninformationen, die eine gerufene Teilnehmergruppe angeben, denen ein von den Anschlussidentifizierungsinformationen spezifizierter Mobilanschluss gehört, als Reaktion auf einen externen Auslöser zum Aktivieren eines Funkrufprozesses und auf Basis von Anschlussidentifikationsinformationen, die in dem externen Auslöser enthalten sind, umfasst und
das Benutzerebenensteuermittel (42) Funkkanaleinstellinformationsentscheidungsmittel (204) umfasst, um auf Basis der Funkrufgruppeninformationen Einstellinformationen für einen Funkruffunkkanal zu bestimmen, die von der Funkbasisstation (6) erzeugt werden.

2. Fernsteuerungseinrichtung (4) nach Anspruch 1, **dadurch gekennzeichnet, dass** das Kontrollebenensteuermittel (41) und das Benutzerebenensteuermittel (42) physisch voneinander getrennt sind.

3. Fernsteuerungseinrichtung (4) nach Anspruch 1, **dadurch gekennzeichnet, dass** das Funkrufgruppenentscheidungsmittel (103) eingerichtet ist, um durch Verwendung einer Umwandlungstabelle für die Anschlussidentifizierungsinformationen und die Funkrufgruppeninformationen die Funkrufgruppeninformationen zu bestimmen.

4. Fernsteuerungseinrichtung (4) nach Anspruch 1, **dadurch gekennzeichnet, dass** das Funksteuerungseinstellinformationsentscheidungsmittel (204) eingerichtet ist, um auf Basis der Funkrufgruppeninformationen und einer derzeitigen Übertragungsrahmenzahl eines Funkkanals in der Funkbasisstation (6) Übertragungsrahmenzahlinformationen des Funkruffunkkanals und Funkrufbezeichnerinformationen, die der auf dem Kanal zu tragenden Funkrufgruppe entsprechen, als die Einstellinformationen zu bestimmen.

5. Fernsteuerungseinrichtung (4) nach Anspruch 1, **dadurch gekennzeichnet, dass** das Kontrollebenensteuermittel (41) weiterhin Mittel (105) zum Erzeugen einer Funkrufnachricht umfasst.

6. Fernsteuerungseinrichtung (4) nach Anspruch 5, **dadurch gekennzeichnet, dass** das Kontrollebenensteuermittel (41) weiterhin Mittel (102) zum Bestimmen von Funkrufzoneninformationen zum Spezifizieren einer Funkbasisstation (6) umfasst, an die die Funkrufnachricht übertragen werden soll.

7. Fernsteuerungseinrichtung (4) nach Anspruch 6, **dadurch gekennzeichnet, dass** das Benutzerebenensteuermittel (42) eingerichtet ist, um die Funkrufnachricht und Einstellinformationen in Übereinstimmung mit den Funkrufzoneninformationen an die Funkbasisstation (6) zu übertragen.

8. Funkkommunikationssystem, umfassend:
eine Funkbasisstation (6), die einen Mobilanschluss (2) über einen Funkkanal beendet;
eine Fernsteuerungseinrichtung (4), die Benutzerebenensteuermittel (42) zum Steuern der Übertragung von Benutzerdaten, die den Mobilanschluss betreffen, und Kontrollebenensteuermittel (41) zum Steuern der Übertragung einer Signalgabe als ein Steuersignal umfasst, und die eingerichtet ist, um eine Funkbasisstation (6) zu verwalten; und
ein Kernnetz (3), das eingerichtet ist, um die Fernsteuerungseinrichtung (4) zu verwalten, **dadurch gekennzeichnet, dass**
das Kontrollebenensteuermittel (41) Funkrufgruppenentscheidungsmittel (103) zum Bestimmen von Funkrufgruppeninformationen, die eine gerufene Teilnehmergruppe angeben, denen ein von den Anschlussidentifizierungsinformationen spezifizierter Mobilanschluss (2) gehört, als Reaktion auf einen externen Auslöser zum Aktivieren eines Funkrufprozesses und auf Basis von Anschlussidentifikationsinformationen, die in dem externen Auslöser enthalten sind, umfasst und
das Benutzerebenensteuermittel (42) Funkkanaleinstellinformationsentscheidungsmittel (204) umfasst, um auf Basis der Funkrufgruppeninformationen Einstellinformationen für einen Funkruffunkkanal zu bestimmen, die von der Funkbasisstation (6) erzeugt werden.

9. Funkkommunikationssystem nach Anspruch 8, **dadurch gekennzeichnet, dass** das Kontrollebenensteuermittel (41) und das Benutzerebenensteuermittel (42) physisch voneinander getrennt sind.

10. Funkkommunikationssystem nach Anspruch 9, **dadurch gekennzeichnet, dass** das Kontrollebenensteuermittel (41) weiterhin Mittel (105) zum Erzeugen einer Funkrufnachricht umfasst.

11. Funkkommunikationssystem nach Anspruch 10, **dadurch gekennzeichnet, dass** das Kontrollebenensteuermittel (41) weiterhin Mittel (102) zum Bestimmen von Funkrufzoneninformationen zum Spezifizieren einer Funkbasisstation (6) umfasst, an die die Funkrufnachricht übertragen werden soll.

12. Funkkommunikationssystem nach Anspruch 11, **dadurch gekennzeichnet, dass** das Benutzerebenensteuermittel (42) eingerichtet ist, um die Funkrufnachricht und Einstellinformationen in Übereinstimmung mit den Funkrufzoneninformationen an die Funkbasisstation (6) zu übertragen.

13. Funkkommunikationssystem nach Anspruch 12, **dadurch gekennzeichnet, dass** die Funkbasisstation (6) eingerichtet ist, um die Funkrufnachricht auf Basis der Einstellinformationen an den Mobilanschluss (2) zu übertragen.

14. Betriebssteuerungsverfahren einer Fernsteuerungseinrichtung (4), die eine Benutzerebenensteuereinheit (42) zum Steuern der Übertragung von Benutzerdaten, die einen Mobilanschluss (2) betreffen, und Kontrollebenensteuermittel (41) zum Steuern der Übertragung einer Signalgabe als ein Steuersignal umfasst, und die eine Funkbasisstation (6) verwaltet, **dadurch gekennzeichnet, dass** sie folgende Schritte umfasst:
Bestimmen in der Kontrollebenensteuereinheit (41) von Funkrufgruppeninformationen, die eine gerufene Teilnehmergruppe angeben, denen ein Mobilanschluss (2) gehört, als Reaktion auf einen externen Auslöser zum Aktivieren eines Funkrufprozesses und auf Basis von Anschlussidentifikationsinformationen, die in dem externen Auslöser enthalten sind; und
Bestimmen in der Benutzerebenensteuereinheit (42) von Einstellinformationen für einen Funkruffunkkanal, die von der Funkbasisstation (6) erzeugt werden, auf Basis der Funkrufgruppeninformationen.

15. Betriebssteuerungsverfahren nach Anspruch 14, **dadurch gekennzeichnet, dass** die Kontrollebenensteuereinheit (41) und die Benutzerebenensteuereinheit (42) physisch voneinander getrennt sind und
das Verfahren weiterhin den Schritt des Übertragens der Funkrufgruppeninformationen von der Kontrollebenensteuereinheit (41) an die Benutzerebenensteuereinheit (42) umfasst.

16. Betriebssteuerungsverfahren nach Anspruch 14, **dadurch gekennzeichnet, dass** der Schritt des Bestimmens der Funkrufgruppeninformationen den Schritt des Bestimmens der Funkrufgruppeninformationen durch Verwendung einer Umwandlungstabelle für die Anschlussidentifizierungsinformationen und die Funkrufgruppeninformationen umfasst.

17. Betriebssteuerungsverfahren nach Anspruch 14, **dadurch gekennzeichnet, dass** der Schritt des Bestimmens der Funkkanaleinstellinformationen den Schritt des Bestimmens von Übertragungsrahmenzahlinformationen des Funkruffunkkanals und Funkrufbezeichnerinformationen, die der auf dem Kanal zu tragenden Funkrufgruppe entsprechen, auf Basis der Funkrufgruppeninformationen und einer derzeitigen Übertragungsrahmenzahl eines Funkkanals in der Funkbasisstation (6) als die Einstellinformationen umfasst.

18. Betriebssteuerungsverfahren nach Anspruch 14, **dadurch gekennzeichnet, dass** es in der Kontrollebenensteuereinheit (41) weiterhin den Schritt des Erzeugens einer Funkrufnachricht umfasst.

19. Betriebssteuerungsverfahren nach Anspruch 18, **dadurch gekennzeichnet, dass** es in der Kontrollebenensteuereinheit (41) weiterhin den Schritt des Bestimmens von Funkrufzoneninformationen zum Spezifizieren einer Funkbasisstation (6) umfasst, an die die Funkrufnachricht übertragen werden soll.

20. Betriebssteuerungsverfahren nach Anspruch 19, **dadurch gekennzeichnet, dass** es in der Benutzerebenensteuereinheit (42) weiterhin den Schritt des Übertragens der Funkrufnachricht und von Einstellinformationen in Übereinstimmung mit den Funkrufzoneninformationen an die Funkbasisstation umfasst.

## Revendications

1. Dispositif de commande radio (4) qui comprend des moyens de commande de plan utilisateur (42) pour commander le transfert de données utilisateur concernant un terminal mobile, et des moyens de commande de plan de commande (41) pour commander le transfert de signalisation en tant que signal de commande, et qui est adapté pour gérer une station de base radio (6), **caractérisé en ce que**
lesdits moyens de commande de plan de commande (41) comprennent des moyens de décision de groupe de radiomessagerie (103) pour déterminer, en réponse à un déclencheur externe pour activer un processus de radiomessagerie, et sur la base d'informations d'identification de terminal contenues dans le déclencheur externe, des informations de groupe de radiomessagerie indiquant un groupe de partie appelée auquel appartient un terminal mobile spécifié par les informations d'identification de terminal, et
lesdits moyens de commande de plan utilisateur (42) comprennent des moyens de décision d'informations de réglage de canal radio (204) pour déterminer les informations de réglage pour un canal radio de radiomessagerie générées par ladite station de base radio (6), sur la base des informations de groupe de radiomessagerie.

2. Dispositif de commande radio (4) selon la revendication 1, **caractérisé en ce que** lesdits moyens de commande de plan de commande (41) et lesdits moyens de commande de plan utilisateur (42) sont séparés physiquement les uns des autres.

3. Dispositif de commande radio (4) selon la revendication 1, **caractérisé en ce que** lesdits moyens de décision de groupe de radiomessagerie (103) sont adaptés pour déterminer les informations de groupe de radiomessagerie en utilisant une table de conversion pour les informations d'identification de terminal et les informations de groupe de radiomessagerie.

4. Dispositif de commande radio (4) selon la revendication 1, **caractérisé en ce que** lesdits moyens de décision d'informations de réglage de canal radio (204) sont adaptés pour déterminer, en tant qu'informations de réglage, des informations de numéro de trame de transmission du canal radio de radiomessagerie et des informations d'identifiant de radiomessagerie correspondant au groupe de radiomessagerie à porter sur le canal, sur la base des informations de groupe de radiomessagerie et d'un numéro de trame de transmission présent d'un canal radio dans ladite station de base radio (6).

5. Dispositif de commande radio (4) selon la revendication 1, **caractérisé en ce que** lesdits moyens de commande de plan de commande (41) comprennent en outre des moyens (105) pour créer un message de radiomessagerie.

6. Dispositif de commande radio (4) selon la revendication 5, **caractérisé en ce que** lesdits moyens de commande de plan de commande (41) comprennent en outre des moyens (102) pour déterminer des informations de zone de radiomessagerie pour spécifier une station de base radio (6) à laquelle le message de radiomessagerie doit être transmis.

7. Dispositif de commande radio (4) selon la revendication 6, **caractérisé en ce que** lesdits moyens de commande de plan utilisateur (42) sont adaptés pour transmettre le message de radiomessagerie et les informations de réglage à ladite station de base radio (6) en conformité avec les informations de zone de radiomessagerie.

8. Système de radio communication comprenant :
une station de base radio (6) qui interrompt un terminal mobile (2) via un canal radio ;
un dispositif de commande radio (4) qui comprend des moyens de commande de plan utilisateur (42) pour commander le transfert de données utilisateur concernant ledit terminal mobile (2), et
des moyens de commande de plan de commande (41) pour commander le transfert de signalisation en tant que signal de commande, et qui sont adaptés pour gérer ladite station de base radio (6) ; et
un réseau d'infrastructure (3) qui est adapté pour gérer ledit dispositif de commande radio (4), **caractérisé en ce que**
lesdits moyens de commande de plan de commande (41) comprennent des moyens de décision de radiomessagerie (103) pour déterminer, en réponse à un déclencheur externe pour activer un processus de radiomessagerie, et sur la base d'informations d'identification de terminal contenues dans le déclencheur externe, des informations de groupe de radiomessagerie indiquant un groupe de partie appelée auquel appartient un terminal mobile (2) spécifié par les informations d'identification de terminal, et
lesdits moyens de commande de plan utilisateur (42) comprennent des moyens de décision d'informations de réglage de canal radio (204) pour déterminer des informations de réglage pour un canal radio de radiomessagerie générées par ladite station de base radio (6), sur la base des informations de groupe de radiomessagerie.

9. Système de radio communication selon la revendication 8, **caractérisé en ce que** lesdits moyen de commande de plan de commande (41) et lesdits moyens de commande de plan utilisateur (42) sont séparés physiquement les uns des autres.

10. Système de radio communication selon la revendication 9, **caractérisé en ce que** lesdits moyens de commande de plan de commande (41) comprennent en outre des moyens (105) pour créer un message de radiomessagerie.

11. Système de radio communication selon la revendication 10, **caractérisé en ce que** lesdits moyens de commande de plan de commande (41) comprennent en outre des moyens (102) pour déterminer des informations de zone de radiomessagerie pour spécifier une station de base radio (6) à laquelle le message de radiomessagerie doit être transmis.

12. Système de radio communication selon la revendication 11, **caractérisé en ce que** lesdits moyens de commande de plan utilisateur (42) sont adaptés pour transmettre le message de radiomessagerie et les informations de réglage à ladite station de base radio (6) en conformité avec les informations de zone de radiomessagerie.

13. Système de radio communication selon la revendication 12, **caractérisé en ce que** ladite station de base radio (6) est adaptée pour transmettre le message de radiomessagerie audit terminal mobile (2) sur la base des informations de réglage.

14. Procédé de commande de fonctionnement d'un dispositif de commande radio (4) qui comprend une unité de commande de plan utilisateur (42) pour commander le transfert de données utilisateur concernant un terminal mobile (2), et une unité de commande de plan de commande (41) pour commander le transfert de signalisation en tant que signal de commande, et qui gère une station de base radio (6), **caractérisé en ce qu'**il comprend les étapes de :
détermination, dans l'unité de commande de plan de commande (41), d'informations de groupe de radiomessagerie indiquant un groupe de partie appelée auquel appartient un terminal mobile (2), en réponse à un déclencheur externe pour activer un processus de radiomessagerie, et sur la base d'informations d'identification de terminal contenues dans le déclencheur externe ; et
détermination, dans l'unité de commande de plan utilisateur (42), d'informations de réglage pour un canal radio de radiomessagerie générées par la station de base radio (6), sur la base des informations de groupe de radiomessagerie.

15. Procédé de commande de fonctionnement selon la revendication 14, **caractérisé en ce que** l'unité de commande de plan de commande (41) et l'unité de commande de plan utilisateur (42) sont séparées physiquement l'une de l'autre, et
le procédé comprend en outre l'étape de transmission des informations de groupe de radiomessagerie de l'unité de commande de plan de commande (41) à l'unité de commande de plan utilisateur (42).

16. Procédé de commande de fonctionnement selon la revendication 14, **caractérisé en ce que** l'étape de détermination des informations de groupe de radiomessagerie comprend l'étape de détermination des informations de groupe de radiomessagerie en utilisant une table de conversion pour les informations d'identification de terminal et les informations de groupe de radiomessagerie.

17. Procédé de commande de fonctionnement selon la revendication 14, **caractérisé en ce que** l'étape de détermination des informations de réglage de canal radio comprend l'étape de détermination, en tant qu'informations de réglage, d'informations de numéro de trame de transmission du canal radio de radiomessagerie et d'informations d'identifiant de radiomessagerie correspondant au groupe de radiomessagerie à porter sur le canal, sur la base des informations de groupe de radiomessagerie et d'un numéro de trame de transmission présent d'un canal radio dans la station de base radio (6).

18. Procédé de commande de fonctionnement selon la revendication 14, **caractérisé en ce qu'**il comprend en outre, dans l'unité de commande de plan de commande (41), l'étape de création d'un message de radiomessagerie.

19. Procédé de commande de fonctionnement selon la revendication 18, **caractérisé en ce qu'**il comprend en outre, dans l'unité de commande de plan de commande, l'étape de détermination d'informations de zone de radiomessagerie pour spécifier une station de base radio (6) à laquelle le message de radiomessagerie doit être transmis.

20. Procédé de commande de fonctionnement selon la revendication 19, **caractérisé en ce qu'**il comprend en outre, dans l'unité de commande de plan utilisateur (42), l'étape de transmission du message de radiomessagerie et d'informations de réglage à la station de base radio (6) en conformité avec les informations de zone de radiomessagerie.
